# EUROPEAN PATENT SPECIFICATION

(11) **EP 3 459 695 B1**
(45) Date of publication and mention of the grant of the patent: **02.04.2025**
(21) Application number: 18194756.5
(22) Date of filing: 17.09.2018
(51) Int. Cl.: B25J 18/00, B25J 9/04

(54) **ROBOT AND ROBOT SYSTEM**
ROBOTER UND ROBOTERSYSTEM
ROBOT ET SYSTÈME DE ROBOT

(30) Priority: 19.09.2017 JP 2017178590
(43) Date of publication of application: 27.03.2019
(73) Proprietor: Seiko Epson Corporation, Tokyo 160-8801 (JP)
(72) Inventor: Toshimitsu, Shunsuke, Nagano 392-8502 (JP)
(74) Representative: MERH-IP Matias Erny Reichl Hoffmann Patentanwälte PartG mbB

(56) References cited:
- JP-A- 2017 087 307
- US-A1- 2017 225 326
- US-B1- 6 178 842
- US-B1- 6 250 174

## Description

### BACKGROUND

### 1. Technical Field

The present invention relates to a robot, and a robot system.

### 2. Related Art

Research and development of technologies that allow robots to perform predetermined work are being conducted.

In relation to this technology, there is known a robot which includes a base and a robot arm including a first arm provided on the base and is rotatable around a first rotation axis and a second arm provided on the first arm and is rotatable around a second rotation axis which is different from the first rotation axis in an axial direction, and in which the first arm and the second arm can overlap when viewed from an axial direction of the second rotation axis and a length in a height direction of a placement portion on which a target object can be placed by the robot arm or an end effector provided in the robot arm is 3.2 times or more the distance between the placement portion and the first rotation axis (see JP-A-2017-87299) .

However, in such a robot, in a case of bringing the end effector closer to an area lower than an installation surface on which the base is installed, the robot arm interferes with the base. For that reason, for example, in a case where a target object on which a robot 20 performs work is placed in the area, it is difficult for the robot to perform work on the target object without requiring assistance by a user, assistance by another device, or the like. There are some single-arm robots which are different from the robot and can perform work without causing the robot arm to interfere with the base with respect to the target object. However, in such a single-arm robot, in a case where the space between an object around the single-arm robot and the single-arm robot is narrowed, the object may interfere with the robot arm when bringing the end effector closer to the target object from an area higher than the installation surface and it may be difficult to narrow the space. Due to such circumstances, in these robots, a position where the robot is installed is limited in order to allow work to be performed on a desired area in some cases.

It was found that both JP 2017-87307 A and US 2017/0225326 would disclose subject-matter possibly relevant to the present invention. The documents disclose robot working environments that involve transitions between same-plane positions.

### SUMMARY

The mentioned problems are solved by the subject-matter of claim 1. Further preferred embodiments are defined in the dependent claims.

With claimed configuration, the robot can narrow the space between the robot and a surrounding object,
the robot can narrow the space between the robot and a surrounding object and may perform work on a wider area,
the robot can narrow the space between the robot and a surrounding object while suppressing interference between the manipulator and the base,
the robot can narrow the space between the robot and a surrounding object by allowing the second arm and the B arm to be in the first state,
the robot can narrow the space between the robot and a surrounding object by setting the A arm and the B arm in the first state by rotating the A arm,
the robot can narrow the space between the robot and a surrounding object based on the information indicating whether or not to change the relative positional relationship between the A rotation axis and the B rotation axis in the operation of the robot, and/or
the robot system can narrow the space between the robot and an object around the robot.

### BRIEF DESCRIPTION OF THE DRAWINGS

The invention will be described with reference to the accompanying drawings, wherein like numbers reference like elements.
Fig. 1 is a diagram illustrating an example of a configuration of a robot system according to an embodiment.
Fig. 2 is a diagram illustrating an example of a configuration of a robot.
Fig. 3 is a diagram illustrating an example of the robot when viewed in the negative direction of the Y-axis in a robot coordinate system in a case where a second rotation axis is parallel to the X-axis in a robot coordinate system and a joint is positioned on the negative direction side of the X-axis with respect to the joint axis.
Fig. 4 is a diagram illustrating an example of the robot when the robot illustrated in Fig. 3 is viewed in the negative direction of the X-axis in the robot coordinate system.
Fig. 5 is a diagram illustrating the difference in ease of occurrence of interference between a manipulator and a base when the robot rotates a joint in the positive or negative direction.
Fig. 6 is a diagram illustrating an example of an operation through a first state among operations that can be performed by the robot.
Fig. 7 is a diagram exemplifying each of six operation modes of a robot control device.
Fig. 8 is a diagram illustrating an example of a functional configuration of the robot control device.
Fig. 9 is a flowchart illustrating an example of a flow of processing performed by the robot control device.
Fig. 10 is an example of a hardware configuration of the robot control device in a case where the robot control device is configured by a plurality of information processing devices.

### DESCRIPTION OF EXEMPLARY EMBODIMENTS

### Embodiment

In the following, embodiments of the invention will be described with reference to the drawings.

### Configuration of robot system

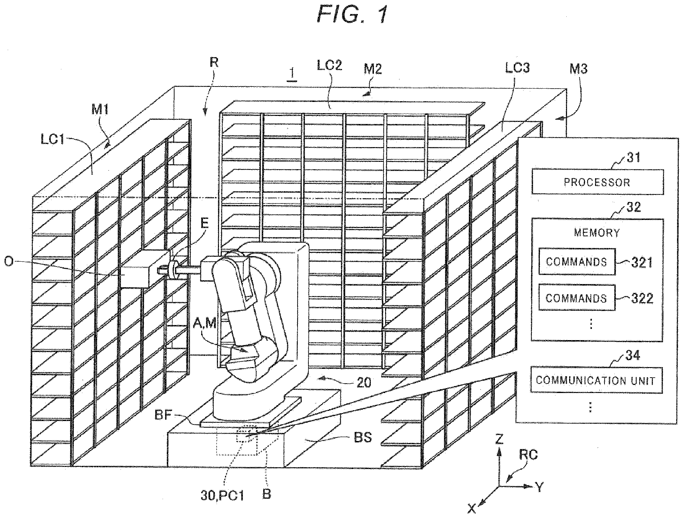

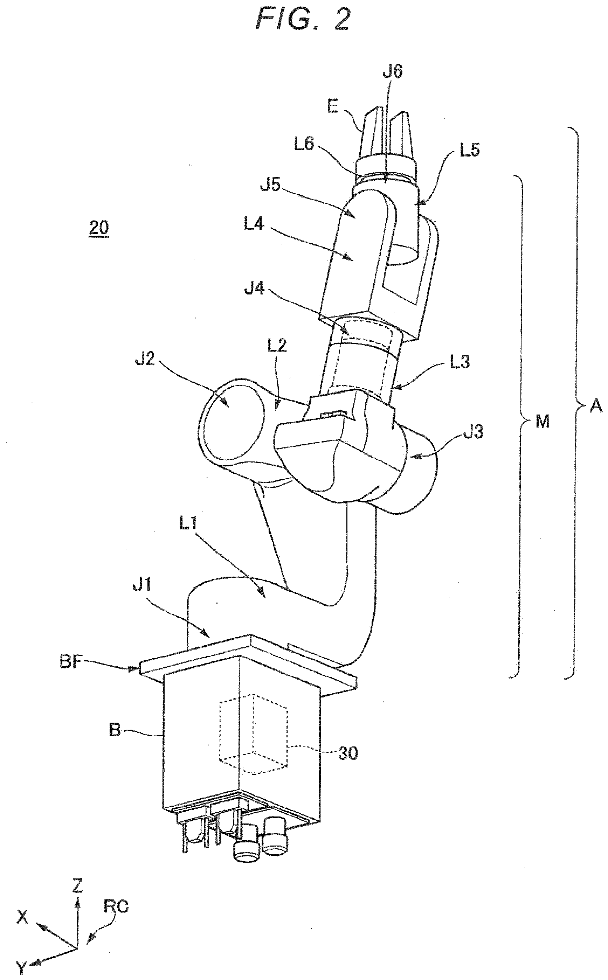

First, a configuration of a robot system 1 will be described with reference to Figs. 1 to 6. Fig. 1 is a diagram illustrating an example of a configuration of the robot system 1 according to the embodiment. The robot system 1 includes, for example, a robot 20. The robot system 1 may have a configuration in which other devices such as an imaging unit (for example, a camera separate from the robot 20 and a teaching device for teaching the robot 20 a desired operation to be performed by the robot 20) are included in addition to robot 20. Fig. 2 is a diagram illustrating an example of the configuration of the robot 20.

In the following, for the sake of convenience of explanation, a direction of gravity (vertically downward direction) will be referred to as a downward direction or downward, and a direction opposite to the downward direction will be referred to as an upward direction or upward. In the following, as an example, a case where the downward direction coincides with the negative direction of the Z-axis in the robot coordinate system RC of the robot 20 will be described. A configuration in which the downward direction does not coincide with the negative direction may be adopted.

In the example illustrated in Fig. 1, the robot system 1 is installed in a room R. The room R is, for example, a rectangular parallelepiped shape including four wall surfaces, a ceiling surface, and a floor surface. A shelf LC is installed on each of wall surfaces M1 to M3, which are three wall surfaces among the four wall surfaces. In the following, the shelf LC installed on the wall surface M1 will be referred to as a shelf LC1, the shelf LC placed on the wall surface M2 will be referred to as a shelf LC2, and the shelf LC placed on the wall surface M3 will be referred to as a shelf LC3. Here, when the inside of the room R is viewed from the ceiling surface toward the floor surface, each of the wall surfaces M1 to M3 is aligned in the order of the wall surface M1, the wall surface M2, and the wall surface M3 in a clockwise direction. At the center of the floor surface, an installation stand BS on which the robot 20 is installed is installed so as not to be moved with respect to the floor surface. The installation stand BS has a hollow inside thereof and has a rectangular parallelepiped shape. The room R may be a room of another shape instead of a rectangular parallelepiped room.

The robot 20 is a single arm robot including a base B, a movable portion A supported by the base B, and a robot control device 30. The single-arm robot is a robot including one arm like the movable portion A in this example. The robot 20 may be a multi-arm robot instead of the single-arm robot. The multi-arm robot is a robot including two or more arms (for example, two or more movable portions A). Among the multi-arm robots, a robot including two arms is also called a dual-arm robot. That is, the robot 20 may be a dual arm robot including two arms or the multi-arm robot having three or more arms (for example, three or more movable portions A).

The shape of the base B is, for example, a substantially rectangular parallelepiped shape of which longitudinal direction is along the vertical direction. The base B is hollow. One of the surfaces of the base B is provided with a flange BF. The movable portion A is provided on the flange BF. That is, the base B supports the movable portion A by the flange BF. The shape of the base B may be other shapes such as a cubic shape, a cylindrical shape, a polyhedron shape, and the like as long as it can support the movable portion A, instead of the shape as described above. The base B may have a configuration in which the flange BF is not provided.

In the following, for convenience of explanation, description will be made in such a way that the surface of the base B on which the flange BF is provided is referred to as an upper surface and the surface of the base B which is opposite to the surface on which the flange BF is provided is referred to as a lower surface. The base B is installed, for example, on the upper surface of the installation stand BS. In the following, as an example, a case where the floor surface of the room R and the upper surface are parallel to the XY plane which is a plane extended by the X-axis and the Y-axis in the robot coordinate system RC will be described. In the following description, a case where the upper surface of the installation stand BS is positioned above the floor surface will be described. One or both of the floor surface of the room R and the upper surface may be non-parallel to the XY plane. The upper surface of the installation stand BS is an example of an installation surface.

Here, an opening (not illustrated) penetrating in the vertical direction and allowing the base B to be inserted into the space inside the installation stand BS is formed on the upper surface of the installation stand BS. The opening is smaller than the flange BF. A user can install (attach) the base B to the installation stand BS by fixing the flange BF and the installation stand BS with a plurality of bolts. That is, a plurality of through-holes into which the plurality of bolts are respectively inserted are formed in each of the flange BF and the installation stand BS. Another method of fixing the flange BF and the installation stand BS may be adopted. In this case, the installation stand BS may have a configuration in which the opening is not formed. The surface on which the robot 20 is installed may be another surface such as a floor surface of the room R, a wall surface of the room R, a ceiling surface of the room R, an outdoor floor surface, an outdoor wall surface, or the like, instead of the upper surface of the installation stand BS. In the following, as an example, a case where the robot 20 is grounded on the upper surface so that the X-axis in the robot coordinate system RC is parallel to the wall surface M1 and the Y-axis in the robot coordinate system RC is parallel to the wall surface M2 will be described. The X-axis may be non-parallel to the wall surface M1 (in this case, the Y-axis is non-parallel to the wall surface M2).

The movable portion A includes a manipulator M and an end effector E.

The manipulator M includes a first arm L1 to a sixth arm L6 which are six arms (links) and a joint J1 to a joint J6 which are six joints. The base B and the first arm L1 are connected by the joint J1. The first arm L1 and the second arm L2 are connected by the joint J2. The second arm L2 and the third arm L3 are connected by the joint J3. The third arm L3 and the fourth arm L4 are connected by the joint J4. The fourth arm L4 and the fifth arm L5 are connected by the joint J5. The fifth arm L5 and the sixth arm L6 are connected by the joint J6. That is, the movable portion A including the manipulator M is a six-axis vertical articulated arm. The movable portion A may be configured to operate with a degree of freedom of 5 axes or less or operate with a degree of freedom of 7 axes or more. The second arm L2 is an example of the A arm. In this case, the third arm L3 is an example of the B arm.

The joint J1 is a joint for which counterclockwise in a case of viewing the joint J1 downward is positive and clockwise in the case is negative and which can rotate 360 degrees or more in the positive and negative directions from a reference position in the rotation of the joint J1. In the following, as an example, description will be made on a case where the joint J1 is a joint that can rotate 360 degrees in each of the positive and negative directions. The joint J1 may be a joint that can rotate by less than 360 degrees instead of the joint that can rotate 360 degrees.

The joint J2 is a joint for which counterclockwise in a case of viewing the joint J2 in a direction from the third arm L3 toward the second arm L2 among two directions along a second rotation axis AX2 is positive and clockwise in the case is negative and which can rotate 360 degrees or more in the positive and negative directions from a reference position in the rotation of the joint J2. In the following, as an example, description will be made on a case where the joint J2 is a joint rotatable by 360 degrees in each of the positive and negative directions. The joint J2 may be a joint that can rotate by less than 360 degrees instead of the joint that can rotate 360 degrees.

The joint J3 is a joint for which counterclockwise in a case of viewing the joint J3 in a direction from the third arm L3 toward the second arm L2 among two directions along a third rotation axis AX3 is positive and clockwise in the case is negative and which can rotate 360 degrees or more in the positive and negative directions from a reference position in the rotation of the joint J3. In the following, as an example, description will be made on a case where the joint J3 is a joint rotatable by 360 degrees in each of the positive and negative directions. The joint J3 may be a joint that can rotate by less than 360 degrees instead of the joint that can rotate 360 degrees.

The joint J4 is a joint for which counterclockwise in a case of viewing the joint J4 in a direction from the fourth arm L4 toward the third arm L3 among two directions along a fourth rotation axis AX4 is positive and clockwise in the case is negative and which can rotate 360 degrees or more in the positive and negative directions from a reference position in the rotation of the joint J4. In the following, as an example, description will be made on a case where the joint J4 is a joint rotatable by 360 degrees in each of the positive and negative directions. The joint J4 may be a joint that can rotate by less than 360 degrees instead of the joint that can rotate 360 degrees.

The joint J5 is a joint for which counterclockwise in a case of viewing the joint J5 in a direction from the third arm L3 toward the second arm L2 among two directions along the third rotation axis AX3 is positive and clockwise in the case is negative and which can rotate 125 degrees in the positive and negative directions from a reference position in the rotation of the joint J5. The joint J5 may be a joint that can rotate by an angle smaller than 125 degrees in each of the positive and negative directions, or may be a joint that can rotate by an angle greater than 125 degrees in each of the positive and negative directions.

The joint J6 is a joint for which counterclockwise in a case of viewing the joint J6 in a direction from an end effector E toward the sixth arm L6 among two directions along a sixth rotation axis AX6 is positive and clockwise in the case is negative and which can rotate 360 degrees or more in the positive and negative directions from a reference position in the rotation of the joint J6. In the following, as an example, description will be made on a case where the joint J6 is a joint rotatable by 360 degrees in each of the positive and negative directions. The joint J6 may be a joint that can rotate by less than 360 degrees instead of the joint that can rotate 360 degrees.

In each of Fig. 1 and Fig. 2, in order to simplify the drawing, configurations of an actuator, an encoder, a reduction gear, a brake, and the like provided in each of the joints J1 to J6 are omitted. The brake may be an electromagnetic brake or a mechanical brake. Some or all of the joints J1 to J6 may be configured not to include the reduction gear. Some or all of the joints J1 to J6 may be configured not to include a brake.

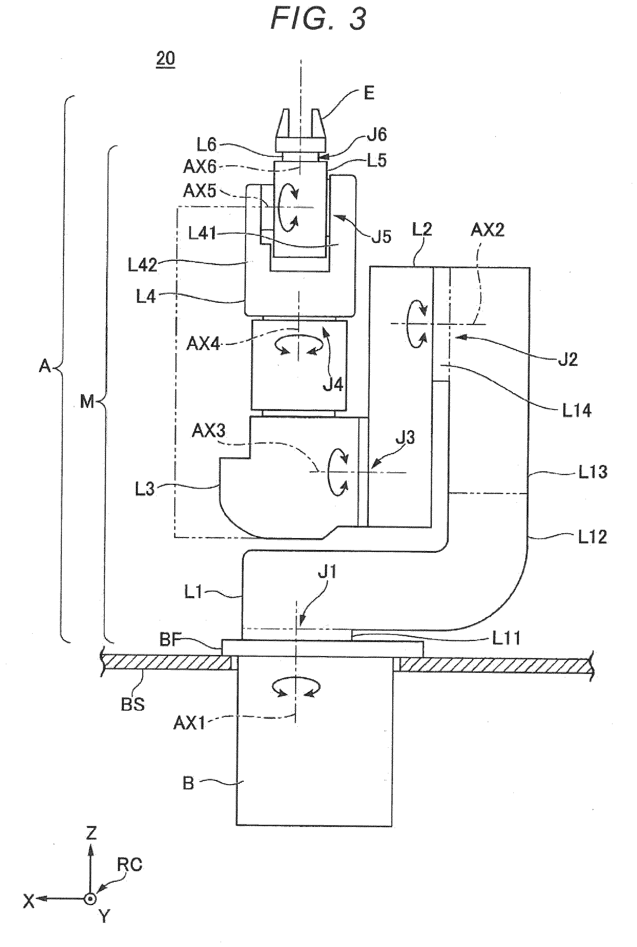

The first arm L1 is rotatable around a first rotation axis AX1 (see, for example, Fig. 3) which is a rotation axis of the joint J1. The second arm L2 is rotatable around the second rotation axis AX2 (see, for example, Fig. 3) which is the rotation axis of the joint J2. The third arm L3 is rotatable around the third rotation axis AX3 (see, for example, Fig. 3) which is the rotation axis of the joint J3. The fourth arm L4 is rotatable around the fourth rotation axis AX4 (see, for example, Fig. 3) which is the rotation axis of the joint J4. The fifth arm L5 is rotatable around the fifth rotation axis AX5 (see Fig. 3, for example) which is the rotation axis of the joint J5. The sixth arm L6 is rotatable around the sixth rotation axis AX6 (see, for example, Fig. 3) which is the rotation axis of the joint J6.

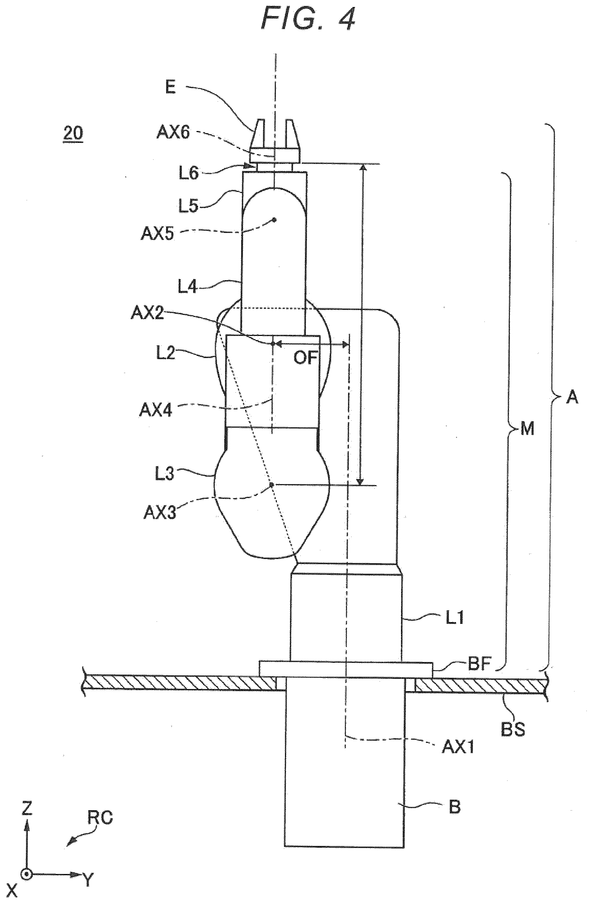

Here, the manipulator M will be described in more detail with reference to Figs. 3 to 6. Fig. 3 is a diagram illustrating an example of the robot 20 when viewed in the negative direction of the Y-axis in the robot coordinate system RC in a case where the second rotation axis AX2 is parallel to the X-axis in the robot coordinate system RC and the joint J2 is positioned on the negative direction side of the X-axis of the joint axis J1 with respect to the joint axis J1. Fig. 4 is a diagram illustrating an example of the robot 20 when the robot 20 illustrated in Fig. 3 is viewed in the negative direction of the X-axis in the robot coordinate system RC.

As illustrated in Fig. 3, since the direction from the upper surface of the base B to the lower surface of the base B coincides with the downward direction, the joint J2 is positioned above the joint J1.

The joint J2 is not positioned on the extension of the first rotation axis AX1. This is because, as illustrated in Fig. 3, the shape of the first arm L1 is a bent shape in a case where the robot 20 is viewed in the negative direction of the Y-axis in the robot coordinate system RC. In this example, the shape of the first arm L1 is a shape rounded and curved almost in L-shape in a case where the robot 20 is viewed toward the negative direction of the Y-axis in the robot coordinate system RC. Specifically, the first arm L1 is configured by four portions L11 to L14. The portion L11 is a portion extending upward from the base B along the first rotation axis AX1 among the four portions that configure the first arm L1 in Fig. 3. The portion L12 is a portion extending in the negative direction of the X-axis in the robot coordinate system RC from the upper end of the portion L11 among the four portions. The portion L13 is a portion extending upward from an end portion of the portion L12 on the side opposite to the portion L11 among the four portions. The portion L14 is a portion extending from an end portion of the portion L13 on the side opposite to the portion L12 in the positive direction of the X-axis, among the four portions. Here, the portions L11 to L14 may be formed as a single body to configure the first arm L1 or may be formed as separate bodies to configure the first arm L1. In Fig. 3, the portions L12 and L13 are substantially orthogonal in a case where the robot 20 is viewed in the negative direction of the Y-axis in the robot coordinate system RC.

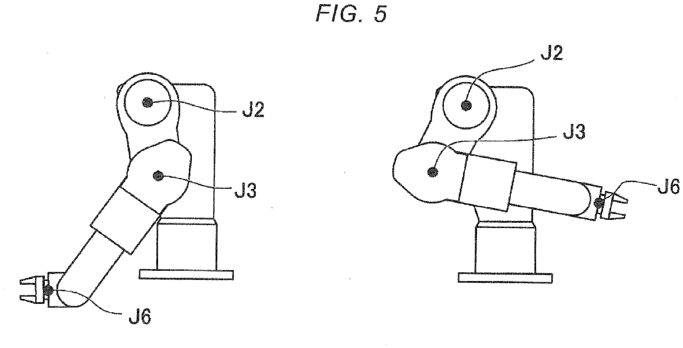

Also, the second rotation axis AX2 does not intersect with the first rotation axis AX1. This is because, as illustrated in Fig. 4, the shape of the first arm L1 has a portion extending in the negative direction of the Y axis in a case where robot 20 is viewed in the negative direction of the X-axis in the robot coordinate system RC. In the example illustrated in Fig. 4, the shape of the first arm L1 is a substantially rounded triangular shape in this case. The joint J2 is provided in the corresponding portion. For that reason, in the example illustrated in Fig. 4, in this case, the second rotation axis AX2 is distant from the first rotation axis AX1 by a distance OF toward the positive direction of the X-axis in the robot coordinate system RC. With this, in a case where the robot 20 rotates the joint J3 in the positive direction of the joint J3 and rotates the third arm L3 around the third rotation axis AX3, it is possible to suppress interference between the manipulator M and the base B in the robot. As a result, in a case where the robot 20 rotates the joint J3 in the negative direction of the joint J3 described above to rotate the third arm L3 about the third rotation axis AX3, the manipulator M and the base B are likely to interfere with each other in the robot 20. Fig. 5 is a diagram illustrating the difference in ease of occurrence of interference between the manipulator M and the base B when the robot 20 rotates the joint J3 in the positive or negative direction. As illustrated in the left diagram of Fig. 5, in a case where the robot 20 rotates the joint J3 in the positive direction of the joint J3 to rotate the third arm L3 about the third rotation axis AX3, the position of the center of gravity of the joint J6 can be positioned below the base B in the robot 20. That is, in this case, in the left diagram, it can be understood that the robot 20 can suppress the interference between the manipulator M and the base B. On the other hand, as illustrated in the right diagram of Fig. 5, in a case where the robot 20 rotates the joint J3 in the negative direction of the joint J3 to rotate the third arm L3 about the third rotation axis AX3, the position of the center of gravity of the joint J6 cannot be positioned below the base B in the robot. That is, in this case, in the right diagram, it can be understood that in the robot 20, the manipulator M easily interferes with the base B.

Description returns to Fig. 3 and Fig. 4. The shape of the second arm L2 is an elongated shape. The second arm L2 is connected to the tip end portion of the first arm L1, that is, an end portion of ends portions of the portion L14 opposite to the portion L13.

The shape of the third arm L3 is an elongated shape. The third arm L3 is connected to an end portion of end portions of the second arm L2 opposite to the end portion connected to the first arm L1.

The fourth arm L4 is connected to the tip end portion of the third arm L3, that is, an end portion of end portions of the third arm L3 opposite to the end portion to which the second arm L2 is connected. On the fourth arm L4, a supporting portion L41 and a supporting portion L42 which are a pair of supporting portions opposed to each other are formed. The supporting portion L41 and the supporting portion L42 are used for connection with the fifth arm L5 of the fourth arm L4. That is, the fourth arm L4 positions the fifth arm L5 between the supporting portion L41 and the supporting portion L42, and is connected to the fifth arm L5 by the supporting portion L41 and the supporting portion L42. The fourth arm L4 is not limited to this, and may have a configuration (cantilever) that supports the fifth arm L5 by one supporting portion, and supports the fifth arm L5 with three or more supporting portions.

As described above, the fifth arm L5 is positioned between the supporting portion L41 and the supporting portion L42 and is connected to the supporting portion L41 and the supporting portion L42.

The shape of the sixth arm L6 is a flat plate shape. That is, the sixth arm L6 is a flange. The sixth arm L6 is connected to an end portion of end portions of the fifth arm L5 opposite to the fourth arm L4. In the sixth arm L6, the end effector E is connected to the corresponding end portion.

In this example, among the rotation axes of the six joints included in the manipulator M, the second rotation axis AX 2 and the third rotation axis AX 3 are parallel to each other. The second rotation axis AX2 and the third rotation axis AX3 may be non-parallel to each other.

Here, in the manipulator M, the first arm L1 and the second arm L2 can overlap when viewed from the axial direction of the second rotation axis AX2. In the manipulator M, the second arm L2 and the third arm L3 can overlap when viewed from the axial direction of the second rotation axis AX2. In the present embodiment, matters that certain two arms overlap each other when the two arms are viewed from a certain direction mean that a ratio of an area where one arm of the two arms overlaps the other arm is equal to or more than a predetermined ratio. The predetermined ratio is, for example, 90%, but it is not limited thereto, and other ratios may be used.

In the manipulator M, the state of the manipulator M can be brought into a first state in which the second arm L2 and the third arm L3 overlap by rotating the joint J2. That is, the state of the manipulator M illustrated in Figs. 3 and 4 is an example of the first state.

The reason why the state of the manipulator M can be set to the first state is that the third arm L3 is formed in a shape and size that does not interfere with the second arm L2 due to the rotation of the joint J2. For example, when the state of the manipulator M is the first state, the length of the second arm L2 in the direction along the first rotation axis AX1 is longer than the length of the third arm L3.

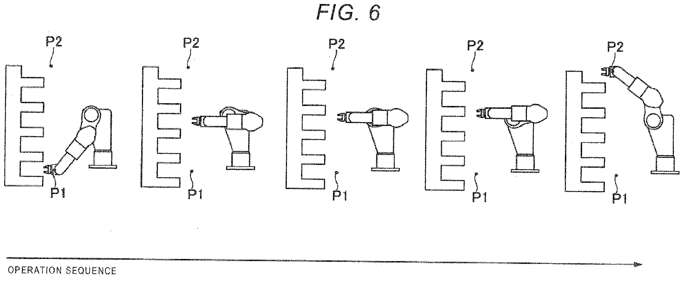

Since the state of the manipulator M can be set to the first state, the robot 20 can perform an operation through the first state. Fig. 6 is a diagram illustrating an example of the operation through the first state among operations that can be performed by the robot 20. A point P1 illustrated in Fig. 6 indicates a first position. The first position may be any position as long as it corresponds to a position that is lower than the upper surface of the installation stand BS which is an installation surface on which the base B is installed and that the end effector E reaches, when viewed from a direction orthogonal to the first rotation axis AX1. A point P2 illustrated in Fig. 6 indicates a second position. The second position may be any position as long as it corresponds to a position that is above the second rotation axis AX2 and that the end effector E reaches, when viewed from a direction orthogonal to the first rotation axis AX1. In the example illustrated in Fig. 6, the X-axis coordinate and the Y-axis coordinate in the robot coordinate system RC at the first position coincide with the X-axis coordinate and the Y-axis coordinate in the robot coordinate system RC at the second position. That is, in the operation illustrated in FIG. 6, the robot 20 moves the position (for example, represented by the position of the center of gravity of the end effector E) of the end effector E along a substantially straight line from the first position to the second position (from the bottom to the top in this example) by going through the first state. With this, the robot 20 can reduce the space provided for preventing a portion of the robot 20 from interfering with other objects. That is, the robot 20 can narrow the space between the robot 20 and a surrounding object.

Description returns to Fig. 2. The actuators respectively provided for the joints J1 to J6 of the manipulator M are communicably connected to a robot control device 30 by cables. With this, each of the actuators operates the manipulator M based on a control signal acquired from the robot control device 30. Wired communication via a cable is performed according to standards such as Ethernet (registered trademark) and universal serial bus (USB), for example. A configuration in which some or all of the actuators may be connected to the robot control device 30 by wireless communication performed according to a communication standard such as Wi-Fi (registered trademark) may be adopted.

The end effector E is an end effector that holds an object. In this example, the end effector E includes a finger portion, and holds the object by gripping the object by the finger portion. Instead of this, the end effector E may be configured to hold the object by lifting the object with suction of air, magnetic force, another jig, or the like. In this example, "holding" means to bring the object into a state where it is possible to lift the object.

The end effector E is communicably connected to the robot control device 30 by a cable. With this, the end effector E performs an operation based on the control signal acquired from the robot control device 30. Wired communication via a cable is performed according to standards such as Ethernet (registered trademark) and USB, for example. The end effector E may be configured to be connected to the robot control device 30 by wireless communication performed according to a communication standard such as Wi-Fi (registered trademark).

The robot control device 30 is configured by at least one processor and at least one memory. In the robot control device 30, a configuration in which the at least one processor is provided in one information processing device may be adopted or a configuration in which the at least one processor is provided in a distributed manner in a plurality of information processing devices may be adopted. In the robot control device 30, a configuration in which the at least one memory is provided in one information processing device may be adopted or a configuration in which the at least one memory is provided in a distributed manner in a plurality of information processing devices may be adopted.

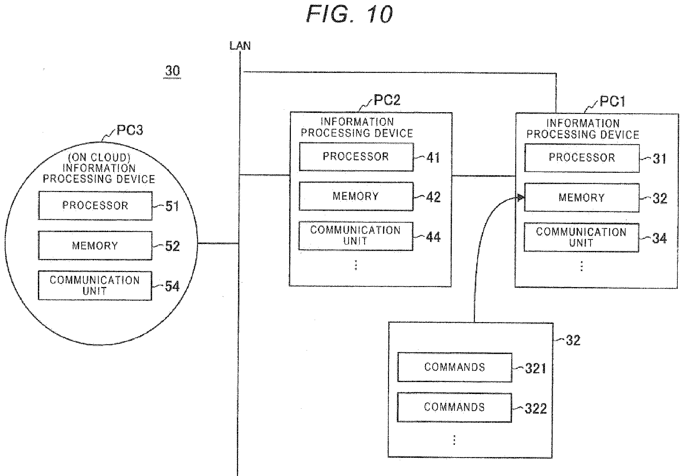

In the example illustrated in Fig. 10, the robot control device 30 is configured with a processor 31 which is one processor provided in an information processing device PC1 and a memory 32 which is one memory provided in the information processing device PC1. The information processing device PC1 may be configured to include another processor in addition to the processor 31, or may be configured to include another memory in addition to the memory 32.

The information processing device PC1 is, for example, a workstation, a desktop personal computer (PC), a notebook PC, a tablet PC, a multifunctional mobile phone terminal (smartphone), an electronic book reader with a communication function, a personal digital assistant (PDA).

The processor 31 is, for example, a central processing unit (CPU). The processor 31 may be another processor such as a field-programmable gate array (FPGA). The processor 31 executes various commands stored in the memory of the robot control device 30. The processor 31 executes various commands stored in a memory of another device.

The memory 32 includes, for example, a hard disk drive (HDD), a solid state drive (SSD), an electrically erasable programmable read-only memory (EEPROM), a read-only memory (ROM), a random access memory (RAM), and the like. That is, the memory 32 includes a temporary storage device and a non-transitory storage device. The memory 32 may be an external storage device connected by a digital input and output port such as a USB in place of the memory built in the information processing device PC1. The memory 32 stores various types of information to be processed by the processor 31 or the processor of another device, various commands (for example, programs and codes) executable by a computer such as commands 321 and 322, various images, and the like.

Each of the commands 321 and 322 is a portion of a plurality of commands (that is, a plurality of commands executable by the computer) to be executed by the processor 31 in order to allow the processor 31 to configure the robot control device 30.

The robot control device 30 includes a communication unit 34 as a hardware function unit to communicate with other devices. The communication unit 34 is configured to include a digital input and output port such as USB, an Ethernet (registered trademark) port, and the like.

In this example, the robot control device 30 is provided inside (built in) the base B. The robot control device 30 may be provided separately from the robot 20, instead of being provided inside the base B. In this case, the robot system 1 includes at least the robot 20 and the robot control device 30 separate from the robot 20.

Here, the robot control device 30 controls the robot 20. More specifically, the robot control device 30 causes the robot 20 to perform an operation specified by an operation program based on, for example, the operation program stored in the memory 32 in advance by the user. In the following, as an example, processing of the robot control device 30 in a case where the robot 20 performs an operation illustrated in Fig. 6 as the operation specified by the operation program will be described in detail.

### Outline of processing performed by robot control device when robot is operated

In the following, an outline of processing performed by the robot control device 30 when operating the robot 20 will be described.

As described above, the robot control device 30 causes the robot 20 to perform the operation designated by the operation program based on the operation program stored in the memory 32 in advance. In this case, the robot control device 30 specifies a plurality of teaching points specified by the operation program in an order determined in advance and calculates a rotation angle of each of the joints J1 to J6 in a case where the control point of the robot 20 coincides with the specified teaching point based on inverse kinematics. Here, a control point of the robot 20 is a virtual point that moves together with the movable portion A of the robot 20, and is, for example, a tool center point (TCP). In the following, as an example, a case where the control point is set to a position of the center of gravity of the joint J6 will be described. A configuration in which the control point is set to another position of the movable portion A may be adopted. The position of the control point is represented by the position of the origin of the control point coordinate system which is a three-dimensional local coordinate system correlated with the position of the center of gravity. That is, the position of the origin coincides with the position of the center of gravity. Also, the origin moves with the center of gravity. The orientation of the control point is represented by a direction in the robot coordinate system RC of each coordinate axis in a control point coordinate system. A configuration in which a position and orientation of the control point are represented by other positions and orientation correlated with the movable portion A may be adopted. Each of the plurality of teaching points designated by the operation program is a virtual point which is a target for the robot 20 to make the control point coincide with the teaching point. The position and the orientation are correlated with each teaching point. In a case where the control point is made to coincide with a certain teaching point, the position and the orientation of the control point coincide with the position and the orientation of the teaching point.

Here, when the rotation angle of each of the joints J1 to J6 is calculated based on inverse kinematics in the case where the control point of the robot 20 coincides with a certain teaching point, the robot control device 30 is able to limit movement of the movable portion A (that is, rotation of each of the joints J1 to J6) by designating an operation mode by the operation program in order to make an operation of the robot 20 coincide with a desired operation. In this example, the robot control device 30 has six operation modes. A configuration in which the robot control device 30 has five or less operation modes may be adopted or a configuration in which the robot control device 30 has seven or more operation modes.

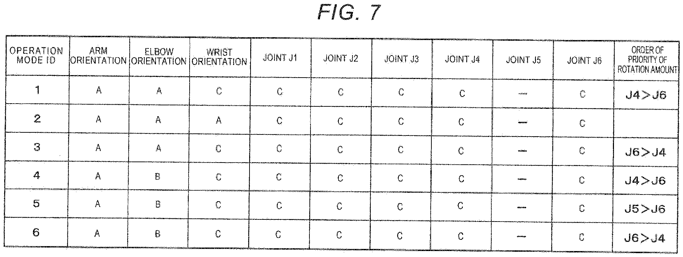

Fig. 7 is a diagram exemplifying each of six operation modes of the robot control device 30. Each of the six operation modes of the robot control device 30 are identified by an operation mode ID, for example, as illustrated in Fig. 7. For that reason, the user can designate the operation mode of the robot control device 30 by the operation program using the operation mode ID. A configuration in which the six operation modes are identified by other information instead of the operation mode ID may be adopted. In the example illustrated in Fig. 7, each of the operation modes identified by the operation mode ID is correlated with ten limitations (that is, condition and information) when the rotation angle of each of the joint J1 to the joint J6 is calculated based on inverse kinematics. In a case where the operation mode is designated by the operation program, the robot control device 30 calculates the rotation angle of each of the joints J1 to J6 based on the position and orientation of the teaching point designated by the operation program and inverse kinematics so as to satisfy ten limitations correlated with the designated operation mode. That is, when the robot 20 performs an operation of making the control point of the robot 20 coincide with the teaching point designated by the operation program, the robot 20 performs the operation so that the robot 20 satisfies the ten limitations correlated with the operation mode designated by the operation program. The number of limitations correlated with each operation mode may be nine or less, and may be eleven or more.

In the example illustrated in Fig. 7, the ten limitations correlated with each operation mode are limitations on each of an arm orientation, an elbow orientation, a wrist orientation, the joint J1, the joint J2, the joint J3, the joint J4, the joint J5, the joint J6, and the order of priority of rotation amount. Here, these limitations will be described in detail. A configuration in which the limitations correlated with each operation mode include some of limitations on each of the arm orientation, the elbow orientation, the wrist orientation, the joint J1, the joint J2, the joint J3, the joint J4, the joint J5, the joint J6, and the order of priority of rotation amount may be adopted or a configuration in which some or all of the limitations on each of the arm orientation, the elbow orientation, the wrist orientation, the joint J1, the joint J2, the joint J3, the joint J4, the joint J5, the joint J6, and the order of priority of rotation amount and other limitations are included may be adopted.

The arm orientation is an orientation obtained by classifying the orientation of the movable portion A according to a relative positional relationship between the first rotation axis AX1 and the fifth rotation axis AX5. The arm orientation includes two orientations of a right arm orientation and a left arm orientation. The right arm orientation is an orientation at which the fifth rotation axis AX5 is positioned on the left side with respect to the first rotation axis AX1, in a case where the robot 20 is viewed in a first direction that is the direction along the second rotation axis AX2, among the orientations of the movable portion A. On the other hand, the left arm orientation is an orientation at which the fifth rotation axis AX5 is positioned on the right side with respect to the first rotation axis AX1 in a case where the robot 20 is viewed in the first direction, among the orientations of the movable portion A.

When the robot 20 performs the operation of making the control point of the robot 20 coincide with the teaching point designated by the operation program, the robot control device 30 causes the robot 20 to operates so as to satisfy any one of an eleventh limitation, a twelfth limitation, and a thirteenth limitation as limitations on the arm orientation which are limitations according to the operation mode specified by the operation program. The eleventh limitation is a limitation to keep the current arm orientation of the robot 20. That is, in a case of moving the robot 20 so that the operation mode satisfies the eleventh limitation, if the current arm orientation of the robot 20 is the right arm orientation, the robot control device 30 does not change the arm orientation of the robot 20 after operating the robot 20 while maintaining the right arm orientation, and if the current arm orientation of the robot 20 is the left arm orientation, the robot control device 30 does not change the arm orientation of the robot 20 after operating the robot 20 while maintaining the left arm orientation. The twelfth limitation is a limitation to change the current arm orientation of the robot 20. That is, in a case of moving the robot 20 so that the operation mode satisfies the twelfth limitation, if the current arm orientation of the robot 20 is the right arm orientation, the robot control device 30 changes the arm orientation of the robot 20 after operating the robot 20 to the left arm orientation, and if the current arm orientation of the robot 20 is the left arm orientation, the robot control device 30 changes the arm orientation of the robot 20 after operating the robot 20 to the right arm orientation. The thirteenth limitation is that the arm orientation is not limited in the operation of the robot 20. That is, in a case of moving the robot 20 so that the operation mode satisfies the thirteenth limitation, the robot control device 30 causes the robot 20 to operate so as to satisfy limitations other than the limitation on the arm orientation among the limitations correlated with the operation mode designated by the operation program. In this case, the robot 20 makes the arm orientation of the robot 20 coincide with the arm orientation determined according to the limitation.

In the example illustrated in Fig. 7, "A" is described in the limitation on the arm orientation (represented simply as "arm orientation" in Fig. 7) in each operation mode. The "A" means that the eleventh limitation is applied as the limitation on the arm orientation. That is, the robot control device 30 causes the robot 20 to operate so as to satisfy the eleventh limitation as a limitation on the arm orientation, whichever of the six operation modes illustrated in Fig. 7 is designated by the operation program. Although not illustrated, for example, in a case where "B" is described in the limitation on the arm orientation in a certain operation mode, this limitation means that the twelfth limitation is applied. Although not illustrated, for example, in a case where "C" is described in the limitation on the arm orientation in a certain operation mode, this limitation means that the thirteenth limitation is applied.

Here, the robot control device 30 may be configured to set limitation on the arm orientation in each operation mode by a flag, or may be configured to set limitation on the arm orientation by other information, another method, or the like.

The robot control device 30 may be configured to apply any of the eleventh, twelfth, and thirteenth limitations on the limitation on the arm orientation, and may be configured to apply another limitation on the arm orientation instead of some or all of the eleventh, twelfth, and thirteenth limitations.

The elbow orientation is an orientation obtained by classifying the orientation of the movable portion A according to a relative positional relationship between the second rotation axis AX2 and the third rotation axis AX3. The arm orientation includes two orientations of an upper elbow orientation and a lower elbow orientation. The upper elbow orientation is an orientation at which the third rotation axis AX3 is positioned on the upper side with respect to the second rotation axis AX2, among the orientations of the movable portion A. On the other hand, the lower elbow orientation is the orientation at which the third rotation axis AX3 is positioned on the lower side with respect to the second rotation axis AX2, among the orientations of the movable portion A.

When the robot 20 performs the operation of making the control point of the robot 20 coincide with the teaching point designated by the operation program, the robot control device 30 causes the robot 20 to operate so as to satisfy any one of the twenty-first limitation, a twenty-second limitation, and a twenty-third limitation as limitations on the elbow orientation which are limitations according to the operation mode specified by the operation program. The twenty-first limitation is a limitation to keep the current elbow orientation of the robot 20. That is, in a case of moving the robot 20 so that the operation mode satisfies the twenty-first limitation, if the current elbow orientation of the robot 20 is the upper elbow orientation, the robot control device 30 does not change the elbow orientation of the robot 20 after operating the robot 20 while maintaining the upper elbow orientation, and if the current elbow orientation of the robot 20 is the lower elbow orientation, the robot control device 30 does not change the elbow orientation of the robot 20 after operating the robot 20 while maintaining the lower elbow orientation. The twenty-second limitation is a limitation to change the current elbow orientation of the robot 20. That is, in a case of moving the robot 20 so that the operation mode satisfies the twenty-second limitation, if the current elbow orientation of the robot 20 is the upper elbow orientation, the robot control device 30 changes the elbow orientation of the robot 20 after operating the robot 20 to the lower elbow orientation, and if the current elbow orientation of the robot 20 is the lower elbow orientation, the robot control device 30 changes the elbow orientation of the robot 20 after operating the robot 20 to the upper elbow orientation. The twenty-third limitation is that the elbow orientation is not limited in the operation of the robot 20. That is, in a case of moving the robot 20 so that the operation mode satisfies the twenty-third limitation, the robot control device 30 causes the robot 20 to operate so as to satisfy limitations other than the limitation on the elbow orientation among the limitations correlated with the operation mode designated by the operation program. In this case, the robot 20 makes the elbow orientation of the robot 20 coincide with the elbow orientation determined according to the limitation.

In the example illustrated in Fig. 7, "A" is described in the limitation on the elbow orientation (represented simply as "elbow orientation" in Fig. 7) in each of 3 operation modes having operation IDs of 1 to 3. The "A" means that the twelve-first limitation is applied as the limitation on the elbow orientation. That is, the robot control device 30 causes the robot 20 to operate so as to satisfy the twenty-first limitation as a limitation on the elbow orientation, whichever of the three operation modes illustrated in Fig. 7 is designated by the operation program. In each of three operation modes having operation IDs of 4 to 6, "B" is described in the limitation on the elbow orientation. The "B" means that the twenty-second limitation is applied as the limitation on the elbow orientation. That is, the robot control device 30 causes the robot 20 to operate so as to satisfy the twenty-second limitation as a limitation on the elbow orientation, whichever of the three operation modes is designated by the operation program. Although not illustrated, for example, in a case where "C" is described in the limitation on the elbow orientation in a certain operation mode, this limitation means that the twenty-third limitation is applied.

Here, the robot control device 30 may be configured to set limitation on the elbow orientation in each operation mode by a flag, or may be configured to set limitation on the elbow orientation by other information, another method, or the like.

The robot control device 30 may be configured to apply any of the twenty-first, twenty-second, and twenty-third limitations on the limitation on the elbow orientation, and may be configured to apply another limitation on the elbow orientation instead of some or all of the twenty-first, twenty-second, and twenty-third limitations.

The wrist orientation is an orientation obtained by classifying the orientation of the movable portion A according to a relative positional relationship between the fourth rotation axis AX4 and the sixth rotation axis AX6. The wrist orientation includes two orientations of an upper wrist orientation and a lower wrist orientation. The upper wrist orientation is an orientation at which the sixth rotation axis AX6 is positioned above the fourth rotation axis AX4, in a case where the fourth rotation axis AX4 is extended in the direction from the joint J4 toward the joint J5 in the two directions along the fourth rotation axis AX4, among the orientations of the movable portion A. On the other hand, the lower wrist orientation is an orientation at which the sixth rotation axis AX6 is positioned below the fourth rotation axis AX4 in the case, among the orientations of the movable portion A.

When the robot 20 performs the operation of making the control point of the robot 20 coincide with the teaching point designated by the operation program, the robot control device 30 causes the robot 20 to operate so as to satisfy any one of the thirty-first limitation, the thirty-second limitation, and the thirty-third limitation as limitations on the wrist orientation which are limitations according to the operation mode specified by the operation program. The thirty-first limitation is a limitation to keep the current wrist orientation of the robot 20. That is, in a case of moving the robot 20 so that the operation mode satisfies the thirty-first limitation, if the current wrist orientation of the robot 20 is the upper wrist orientation, the robot control device 30 does not change the wrist orientation of the robot 20 after operating the robot 20 while maintaining the upper wrist orientation, and if the current wrist orientation of the robot 20 is the lower wrist orientation, the robot control device 30 does not change the wrist orientation of the robot 20 after operating the robot 20 while maintaining the lower wrist orientation. The thirty-second limitation is a limitation to change the current wrist orientation of the robot 20. That is, in a case of moving the robot 20 so that the operation mode satisfies the thirty-second limitation, if the current wrist of the robot 20 is the upper wrist orientation, the robot control device 30 change the wrist orientation of the robot 20 after operating the robot 20 to the lower wrist orientation, and if the current wrist orientation of the robot 20 is the lower wrist orientation, the robot control device 30 change the wrist orientation of the robot 20 after operating the robot 20 to the upper wrist orientation. The thirty-third limitation is a limitation that does not limit the wrist orientation in the operation of the robot 20. That is, in a case of moving the robot 20 so that the operation mode satisfies the thirty-third limitation, the robot control device 30 causes the robot 20 to operate so as to satisfy limitations other than the limitation on the wrist orientation among the limitations correlated with the operation mode designated by the operation program. In this case, the robot 20 makes the wrist orientation of the robot 20 coincide with the wrist orientation determined according to the limitation.

In the example illustrated in Fig. 7, "A" is described in the limitation on the wrist orientation (represented simply as "wrist orientation" in Fig. 7) in the 2 operation mode having the operation mode ID. The "A" means that the thirty-first limitation is applied as the limitation on the wrist orientation. That is, the robot control device 30 causes the robot 20 to operate so as to satisfy the thirty-first limitation as a limitation on the wrist orientation in a case where the operation mode is designated by the operation program. In each of the five operation modes having the operation mode IDs of 1, 3 to 6, the "C" is described in the limitation on the wrist orientation. The "C" means that the thirty-third limitation is applied as the limitation on the wrist orientation. That is, the robot control device 30 causes the robot 20 to operate so as to satisfy the thirty-third limitation as a limitation on the arm orientation, whichever of the five operation modes is designated by the operation program. Although not illustrated, for example, in a case where "B" is described in the limitation on the wrist orientation in a certain operation mode, this limitation means that the thirty-second limitation is applied.

Here, the robot control device 30 may be configured to set limitation on the wrist orientation in each operation mode by a flag, or may be configured to set limitation on the wrist orientation by other information, another method, or the like.

The robot control device 30 may be configured to apply any of the thirty-first, thirty-two, and thirty-third limitations on the limitation on the wrist orientation, and may be configured to apply another limitation on the wrist orientation instead of some or all of the thirty-first, thirty-two, and thirty-third limitations.

The limitation on the joint J1 is a limitation on the rotation direction of the joint J1. When the robot 20 performs the operation of making the control point of the robot 20 coincide with the teaching point designated by the operation program, the robot control device 30 causes the robot 20 to operate so as to satisfy any one of a forty-first limitation, a forty-second limitation, a forty-third limitation, and a forty-fourth limitation as limitations on the joint J1 which are limitations according to the operation mode specified by the operation program. The forty-first limitation is to rotate the joint J1 in the positive direction. That is, in a case of moving the joint J1 so that the operation mode satisfies the forty-first limitation, the robot control device 30 rotates the joint J1 in the positive direction. As for the forty-second limitation, in a case of moving the joint J1 so that the operation mode satisfies the forty-second limitation, the joint J1 is rotated in the negative direction. The forty-third limitation is a limitation to rotate the joint J1 in the direction, in which the amount of rotation of the joint J1 becomes smaller, among the positive direction and the negative direction in an operation of the robot 20. That is, in a case of moving the joint J1 so that the operation mode satisfies the forty-third limitation, the robot control device 30 causes the joint J1 to operate so as to satisfy limitations other than the limitation on the joint J1 among the limitations correlated with the operation mode designated by the operation program. In this case, the robot 20 rotates the joint J1 in a direction in which the rotation amount of the joint J1 becomes smaller among the positive direction and the negative direction. The forty-fourth limitation is a limitation that does not limit the rotation of the joint J1. That is, in a case of moving the joint J1 so that the operation mode satisfies the forty-fourth limitation, the robot control device 30 causes the joint J1 to operate so as to satisfy limitations other than the limitation on the joint J1 among the limitations correlated with the operation mode designated by the operation program.

In the example illustrated in Fig. 7, "C" is described in the limitation on the joint J1 (represented simply as "joint J1" in Fig. 7) in each of six operation modes having operation mode IDs of 1 to 6. The "C" means that the forty-third limitation is applied as the limitation on the joint J1. That is, the robot control device 30 causes the joint J1 to operate so as to satisfy the forty-third limitation as a limitation on the joint J1, whichever of the six operation modes is designated by the operation program. Although not illustrated, for example, in a case where "A" is described in the limitation on the joint J1 in a certain operation mode, this limitation means that the forty-first limitation is applied. Although not illustrated, for example, in a case where "B" is described in the limitation on the joint J1 in a certain operation mode, this limitation means that the forty-second limitation is applied. Although not illustrated, for example, in a case where "-" is described in the limitation on the joint J1 in a certain operation mode, this limitation means that the forty-fourth limitation is applied.

Here, the robot control device 30 may be configured to set limitation on the joint J1 in each operation mode by a flag, or may be configured to set limitation on the joint J1 by other information, another method, or the like.

The robot control device 30 may be configured to apply any of the forty-first, forty-second, forty-third, and forty-fourth limitations on the limitation on the joint J1, and may be configured to apply another limitation on the joint J1 instead of some or all of the forty-first, forty-second, forty-third, and forty-fourth limitations.

The limitation on each of the joints J2 to J6 is limitation similar to the limitation on the joint J1, and thus, description thereof will be omitted. In the example illustrated in Fig. 7, in each of the operation modes, the limitation represented by "C" is applied to each of the joints J2 to J4 and the joint J6. The limitation is limitation similar to the forty-third limitation among the limitations on the joint J1. In this example, the limitation represented by "-" is applied to the joint J5. The limitation is limitation similar to the forty-fourth limitation among the limitations on the joint J1.

The limitation on the order of priority of the rotation amount is limitation relating to a relative magnitude relationship of the rotation amount (that is, rotated amount and rotated angle) of each of three joints of the joints J4 to J6. When the robot 20 performs the operation of making the control point of the robot 20 coincide with the teaching point designated by the operation program, the robot control device 30 causes the robot 20 to operate so as to satisfy any one of a fifty-first limitation, a fifty-second limitation, a fifty-third limitation, and a fifty-fourth limitation as limitations on the order of priority of the rotation amount which are limitations according to the operation mode specified by the operation program. The fifty-first limitation is a limitation to make the rotation amount of the joint J4 smaller than the rotation amount of the joint J6. That is, in a case of moving the robot 20 so that the operation mode satisfies the fifty-first limitation, the robot control device 30 operates the robot 20 so that the rotation amount of the joint J4 becomes smaller than the rotation amount of the joint J6. The fifty-second limitation is to make the rotation amount of the joint J6 smaller than the rotation amount of the joint J4. That is, in a case of moving the robot 20 so that the operation mode satisfies the fifty-second limitation, the robot control device 30 operates the robot 20 so that the rotation amount of the joint J6 becomes smaller than the rotation amount of the joint J4. The fifty-third limitation is to make the rotation amount of the joint J5 smaller than the rotation amount of the joint J6. That is, in a case of moving the robot 20 so that the operation mode satisfies the fifty-third limitation, the robot control device 30 operates the robot 20 so that the rotation amount of the joint J5 becomes smaller than the rotation amount of the joint J6. The fifty-fourth limitation is limitation that does not limit the relative magnitude relationship of the rotation amount of each of the three joints of joints J4 to J6. That is, in a case of moving the robot 20 so that the operation mode satisfies the fifty-fourth limitation, the robot control device 30 causes the robot 20 to operate so as to satisfy limitations other than the limitation on the order of priority of the rotation amount among the limitations correlated with the operation mode designated by the operation program.

In the example illustrated in Fig. 7, in each of the two operation modes having the operation mode IDs of 1 and 4, "J4 > J6" is described in the limitation on the order of priority of the rotation amount (in Fig. 7, simply represented by "order of priority of rotation amount"). The "J4 > J6" means that the fifty-first limitation is applied as limitation on the order of priority of the rotation amount. That is, the robot control device 30 causes the robot 20 to operate so as to satisfy the fifty-first limitation as a limitation on the order of priority of the rotation amount, whichever of the two operation modes is designated by the operation program. The "J6 > J4" is described in the limitation on the order of priority of the rotation amount in each of the two operation modes having operation mode IDs of 3 and 6. The "J6 > J4" means that the fifty-second limitation is applied as a limitation on the order of priority of the rotation amount. That is, the robot control device 30 causes the robot 20 to operate so as to satisfy the fifty-second limitation as a limitation on the order of priority of the rotation amount, whichever of the two operation modes is specified by the operation program. The "J5 > J6" is described in the limitation on the order of priority of the rotation amount in the operation mode having the operation mode ID of 5. The "J5 > J6" means that the fifty-third limitation is applied as a limitation on the order of priority of the rotation amount. That is, in a case where any one of the operation modes is specified by the operation program, the robot control device 30 causes the robot 20 to operate so as to satisfy the fifty-third limitation as the limitation on the order of priority of the rotation amount. Also, nothing is described in the limitation on the order of priority of the rotation amount in the operation mode having the operation mode ID of 2. In this case, it means that the fifty-fourth limitation is applied as a limitation on the order of priority of the rotation amount. That is, in a case where any one of the operation modes is specified by the operation program, the robot control device 30 causes the robot 20 to operate so as to satisfy the fifty-fourth limitation as the limitation on the order of priority of the rotation amount.

Here, the robot control device 30 may be configured to set limitation on the order of priority of the rotation amount in each operation mode by a flag, or may be configured to set limitation on the order of priority of the rotation amount by other information, another method, or the like.

The robot control device 30 may be configured to apply any of the fifty-first, fifty-second, fifty-third, and fifty-fourth limitations on the limitation on the order of priority of the rotation amount, and may be configured to apply another limitation on the order of priority of the rotation amount instead of some or all of the fifty-first, fifty-second, fifty-third, and fifty-fourth limitations.

In a case where the robot control device 30 causes the robot 20 to perform the operation illustrated in Fig. 6, information for designating a first teaching point which is a teaching point positioned at the first position, a second teaching point positioned at the second position, and an operation mode indicated by any one of the operation mode IDs 4 to 6 is described in the operation program. That is, the robot control device 30 sets the operation mode to one of the operation modes indicated by any one of the operation mode IDs of 4 to 6 based on the operation program and specifies the first teaching point and the second teaching point as teaching points for making the control point of the robot 20 coincide with the teaching point. With this, the robot control device 30 can cause the robot 20 to perform the operation illustrated in Fig. 6. Thus, the robot 20 can narrow the space between the robot 20 and a surrounding object.

Here, in the case where the robot 20 performs the operation illustrated in Fig. 6, when the robot 20 is viewed in the first direction described above, the robot 20 changes the relative positional relationship between the second rotation axis AX2 and the third rotation axis AX3. In this case, the relative positional relationship between the second rotation axis AX2 and the third rotation axis AX3 is, for example, a left positional relationship in which the third rotation axis AX3 is positioned on the left side with respect to the second rotation axis AX2 in this case or a right positional relationship in which the third rotation axis AX3 is positioned on the right side with respect to the second rotation axis AX2 in this case. In this case, the relative positional relationship between the second rotation axis AX2 and the third rotation axis AX3, for example, may be another relative positional relationship between the second rotation axis AX2 and the third rotation axis AX3 in this case, instead of the left and right positional relationships.

That is, the ten limitations correlated with each of the six operation modes illustrated in Fig. 7 can be said to be an example of information indicating whether or not to change the relative positional relationship between the second rotation axis AX2 and the third rotation axis AX3 in the case where the robot 20 is viewed in the first direction. That is, the ten limitations correlated with the operation mode indicated by any one of the operation mode IDs of 1 to 3 is an example of information indicating that the relative positional relationship between the second rotation axis AX2 and the third rotation axis AX3, which is the positional relationship when the robot 20 is viewed in the first direction, is not to be changed. The ten limitations correlated with the operation mode indicated by any one of the operation mode IDs of 4 to 6 is an example of information indicating that the relative positional relationship between the second rotation axis AX2 and the third rotation axis AX3, which is the positional relationship when the robot 20 is viewed in the first direction, is to be changed.

In summary, the robot control device 30 causes the robot 20 to perform the operation through the first state which is illustrated in FIG. 6, based on information indicating whether or not to change the relative positional relationship between the second rotation axis AX2 and the third rotation axis AX3, the relative positional relationship being the positional relationship when the robot 20 is viewed in the first direction. As one specific example, the robot control device 30 according to this embodiment causes the robot 20 to perform the operation based on the operation mode designated by the operation program. With this, the robot 20 can restrain the position where the robot is installed from being restricted in order to perform work on the desired area. The robot control device 30 may be configured to cause the robot 20 to perform the operation, based on information which is other information different from the ten limitations correlated with the operation mode and indicates whether or not to change the relative positional relationship between the second rotation axis AX2 and the third rotation axis AX3, which is the positional relationship in this case.

### Functional configuration of robot control device

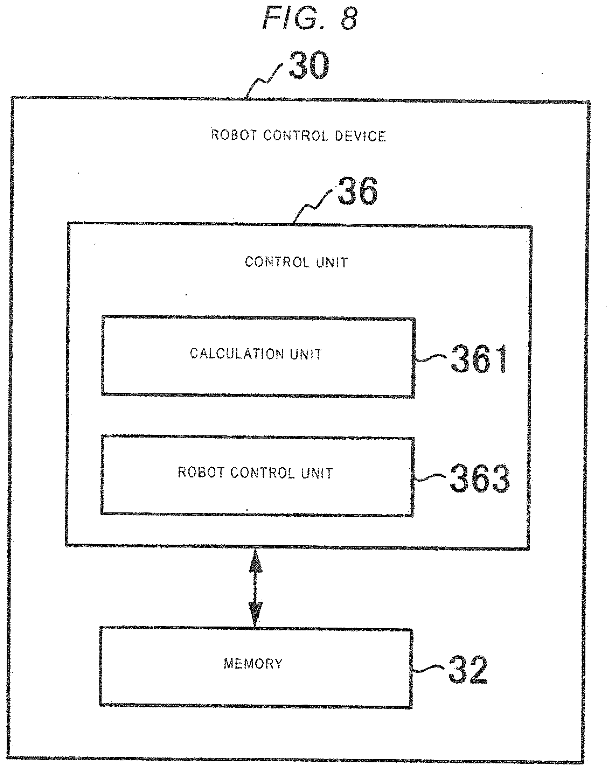

In the following, a functional configuration of the robot control device 30 will be described with reference to Fig. 8. Fig. 8 is a diagram illustrating an example of a functional configuration of the robot control device 30.

The robot control device 30 includes a memory 32 and a control unit 36.

The control unit 36 controls the entire robot control device 30. The control unit 36 includes a calculation unit 361 and a robot control unit 363. These functional units included in the control unit 36 are realized, for example, by executing various commands such as commands 321 and 322 stored in the memory 32 by the processor 31. Some or all of the functional units may be hardware functional units such as a large scale integration (LSI), an application specific integrated circuit (ASIC), and the like.

The calculation unit 361 reads the operation program stored in advance in the memory 32 from the memory 32. The calculation unit 361 specifies an operation mode of the robot control device 30 based on the read operation program. The calculation unit 361 specifies a position and orientation of the teaching point designated by the operation program. The calculation unit 361 calculates the rotation angle of each of the joints J1 to J6 based on the ten limitations correlated with the specified operation mode, the position and orientation of the teaching point, and inverse kinematics.

The robot control unit 363 operates the robot 20 based on the rotation angle calculated by the calculation unit 361 and the ten limitations correlated with the operation mode specified by the calculation unit 361.

### Processing performed by robot control device

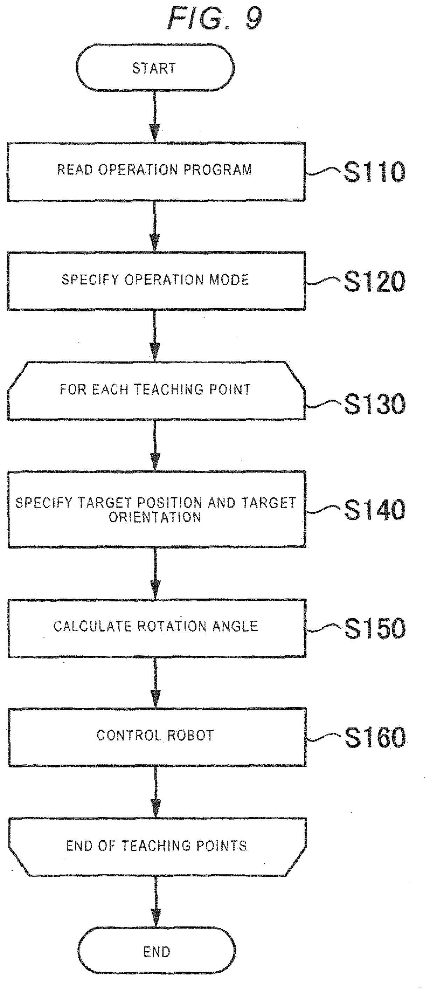

In the following, a flow of processing performed by the robot control device 30 will be described with reference to Fig. 9. Fig. 9 is a flowchart illustrating an example of a flow of processing to be performed by the robot control device 30.

The calculation unit 361 reads the operation program stored in advance in the memory 32 from the memory 32 (step S110).

Next, the calculation unit 361 specifies the operation mode designated by the operation program based on the operation program read from the memory 32 in step S110 (step S120).

Next, based on the operation program read out from the memory 32 in step S110, the calculation unit 361 sequentially selects the teaching point designated by the operation program one by one from the top as a target teaching point and repeatedly performs processing of steps S140 to S150 on the selected target teaching point (step S130). In the following, as an example, description will be made on a case where the first teaching point and the second teaching point are selected as the target teaching point in the order of the first teaching point and the second teaching point in step S130.

After the target teaching point is selected in step S130, the calculation unit 361 specifies the position and orientation of a target teaching point as a target position and a target orientation (step S140).

Next, based on the target position and the target orientation specified in step S140, the operation mode specified in step S120, and inverse kinematics, the calculation unit 361 calculates the rotation angle of each of the joints J1 to J6 in a case where the teaching point of the robot 20 coincides with the target teaching point (step S150).

Next, the robot control unit 363 operates each of the joints J1 to J6 based on the rotation angle calculated by the calculation unit 361 in step S150 and causes a control point of the robot 20 to coincide with the target teaching point (step S160).

After processing of step S160 is performed, the calculation unit 361 makes a transition to step S130, and selects the next teaching point as a target teaching point. As such, the robot control device 30 can cause the robot 20 to perform the operation illustrated in Fig. 6 by repeating processing from step S130 to step S160. As a result, the robot 20 can narrow the space between the robot 20 and a surrounding object. For example, in the example illustrated in Fig. 1, the robot 20 can narrow the space between the robot 20 and the shelf LC1 in a case of performing work on the shelf LC1. Then, in a case of performing work on the shelf LC2, the robot 20 rotates the joint J1 to set the state of the robot 20 to a state in which the joint J2 is close to the shelf LC 2 among two states in which the Y-axis in the robot coordinate system RC and the second rotation axis AX2 become parallel, thereby making it possible to narrow the space between the robot 20 and the shelf LC2. Then, in a case of performing work on the shelf LC3, the robot 20 rotates the joint J1 to set the state of the robot 20 to a state in which the joint J2 is close to the shelf LC3 among two states in which the X-axis in the robot coordinate system RC and the second rotation axis AX2 become parallel, thereby making it possible to narrow the space between the robot 20 and the shelf LC3. In a case where an unselected teaching point is not present in the calculation unit 361 in step S130, the calculation unit 361 and the robot control unit 363 end processing.

The robot control device 30 described above may be configured by some or all of the plurality of information processing devices as illustrated in Fig. 10, instead of the information processing device PC1 including one processor 31 and one memory 32. Fig. 10 illustrates an example of a hardware configuration of the robot control device 30 in a case where the robot control device 30 is configured by a plurality of information processing devices.

Since the information processing device PC2 and the information processing device PC3 illustrated in Fig. 10 have the same configuration as the information processing device PC1, description thereof will be omitted.

In the example illustrated in Fig. 10, the information processing device PC1 and the information processing device PC2 are connected so as to be able to communicate with each other by wireless or wired communication. In this example, the information processing device PC1 and the information processing device PC3 are connected to each other via a local area network (LAN) so as to be able to communicate with each other by wireless or wired communication. In the example, the information processing device PC2 and the information processing device PC3 are connected via a LAN so as to be able to communicate with each other by wireless or wired communication.

In the example illustrated in Fig. 10, the robot control device 30 is configured with at least one of a processor 31, a processor 41, and a processors 51 and at least one of a memory 32, a memory 42, and a memory 52. In a case where the robot control device 30 is configured with two or more of the processor 31, the processor 41, and the processor 51, the two or more processors configuring the robot control device 30 cooperate to realize the function of the robot control device 30 by performing communication by the communication unit. In this case, the two or more processors execute processing by the function of the robot control device 30 based on the commands stored in at least one of the memory 32, the memory 42, and the memory 52.

As in the example illustrated in Fig. 10, in a case where the robot control device 30 is configured by a plurality of information processing devices, a teaching device 40 is communicably connected to at least one of the plurality of information processing devices.

The robot control device 30 described above may be configured to be capable of switching the operation mode for each operation to be performed by the robot 20 based on the operation program or may be configured to be capable of switching the operation mode for each work to be performed by the robot 20.

The manipulator M may be configured so that the third arm L3 and the fourth arm L4 can overlap when viewed from the axial direction of the third rotation axis AX3. The manipulator M may be configured so that the fifth arm L5 and the sixth arm L6 can overlap when viewed from the axial direction of the fifth rotation axis AX5.

An example of the A arm may be the first arm L1. In this case, an example of the B arm is the second arm L2. The example of the A arm may be the third arm L3. In this case, the example of the B arm is the fourth arm L4.

The example of the A arm may be the fourth arm L4. In this case, the example of the B arm is the fifth arm L5. The example of the A arm may be the fifth arm L5. In this case, the example of the B arm is the sixth arm L6.

As described above, in the robot 20, the A arm (in this example, second arm L2) and the B arm (in this example, third arm L3) can be in the first state where the A arm and the B arm overlap when viewed from the axial direction of the B rotation axis (in this example, third rotation axis AX3), and the tip end of the manipulator (in this example, manipulator M) (in this example, center of gravity of the joint J6) can be moved from a first position below the installation surface (in this example, upper surface of the installation stand BS) of the base (base B in this example) to a second position above the A rotation axis (in this example, second rotation axis AX2) through the first state, when viewed from the direction orthogonal to the first rotation axis (in this example, first rotation axis AX1). With this, the robot 20 can narrow the space between the robot 20 and a surrounding object.

In the robot 20, the second position is higher than the B rotation axis when viewed from a direction orthogonal to the first rotation axis. With this, the robot 20 can narrow the space between the robot 20 and a surrounding object, and can perform work on a wider area.

In the robot 20, the A rotation axis does not intersect with the first rotation axis. With this, the robot 20 can narrow the space between the robot 20 and a surrounding object suppressing the interference between the manipulator and the base.

In the robot 20, the A arm is the second arm (in this example, second arm L2). With this, in the robot, the second arm and the B arm can be brought into the first state, so that the space between the robot 20 and a surrounding object can be narrowed.

In the robot 20, the rotation range of the A arm is 360 degrees or more. With this, the robot 20 can make the A arm and the B arm bring into the first state by rotating the A arm, thereby making it possible to narrow the space between the robot 20 and a surrounding object.

The robot 20 operates based on information (in this example, ten limitations correlated with each operation mode) indicating whether or not to change the relative positional relationship between the A rotation axis and the B rotation axis in the operation of the robot 20. With this, the robot 20 can narrow the space between the robot 20 and a surrounding object based on information indicating whether or not to change the relative positional relationship between the A rotation axis and the B rotation axis in the operation of the robot 20.

Although the embodiment of the invention has been described in detail with reference to the drawings, a specific configuration is not limited to this embodiment, and various modifications, substitutions, deletions, and the like may be made thereto without departing from the scope of the invention as defined in the appended claims.

A program for realizing the function of any component in the device (for example, robot control device 30) described above may be recorded on a computer-readable recording medium and the program may be read and executed by a computer system. The "computer system" referred to here includes an operating system (OS) and hardware such as peripheral devices. The "computer-readable recording medium" refers to a storage device such as a flexible disk, a magneto-optical disk, a portable medium such as a ROM, a compact disk (CD)-ROM, and a hard disk built in a computer system. Furthermore, the "computer readable recording medium" refers to a recording medium holding the program for a certain period of time, like a volatile memory (RAM) inside the computer system which serves as a server or a client in a case where the program is transmitted via a network such as the Internet or a communication line such as a telephone line.

The above program may be transmitted from the computer system in which the program is stored in the storage device or the like to another computer system via a transmission medium or by a transmission wave in a transmission medium. Here, the "transmission medium" for transmitting a program refers to a medium having a function of transmitting information such as a network (communication network) such as the Internet and a communication channel (communication line) such as a telephone line. The program described above may be for realizing a portion of the functions described above. Furthermore, the program described above may be a so-called difference file (difference program) which can realize the function described above by a combination with the program already recorded in the computer system.

## Claims

1. A robot (20) comprising:
an installation stand (BS);
a base (B) with a base flange (BF) installed to the installation stand (BS) by fixing the base flange (BF) to said installation stand (BS); and
a manipulator (M) that is provided on the base (B) so as to be rotatable around a first rotation axis (AX1),
wherein the manipulator (M) includes
an A arm that is rotatable around an A rotation axis parallel to an installation surface of the base (B), and
a B arm provided to be rotatable around a B rotation axis parallel to the A rotation axis with respect to the A arm,
the A arm and the B arm are allowed to be brought into a first state in which the A arm and the B arm overlap when viewed from an axial direction of the B rotation axis,
the A rotation axis does not intersect with the first rotation axis (AX1), and
a tip end of the manipulator (M) is movable from a first position (P1) positioned on a side opposite to the base flange (BF) with respect to the installation surface being an upper surface of the installation stand (BS) to a second position (P2) positioned on the side opposite to the base (B) with respect to a plane parallel to the installation surface and containing the A rotation axis through the first state when viewed from a direction orthogonal to the first rotation axis (AX1).

2. The robot (20) according to Claim 1,
wherein the second position (P2) is positioned on a side opposite to the base (B) with respect to the B rotation axis when viewed from the direction orthogonal to the first rotation axis (AX1).

3. The robot (20) according to Claim 1,
wherein the A arm is a second arm.

4. The robot (20) according to Claim 1,
wherein a rotation range of the A arm is 360 degrees or more.

5. The robot (20) according to Claim 1,
wherein the robot (20) operates based on information indicating whether or not to change a relative positional relationship between the A rotation axis and the B rotation axis in an operation of the robot (20).

6. A robot system (1) comprising:
the robot (20) according to any of claims 1 to 5;
a robot control device (30) that controls the robot (20); and
a shelf that includes a first placement surface on which the first position (P1) is positioned and a second placement surface on which the second position (P2) is positioned.

## Patentansprüche

1. Roboter (20), umfassend:
einen Installationsständer (BS);
eine Basis (B) mit einem Basisflansch (BF), die an dem Installationsständer (BS) durch Befestigen des Basisflansches (BF) an dem Installationsständer (BS) installiert ist; und
einen Manipulator (M), der auf der Basis (B) bereitgestellt ist, sodass er um eine erste Drehachse (AX1) drehbar ist,
wobei der Manipulator (M) enthält
einen A-Arm, der um eine A-Drehachse parallel zu einer Installationsfläche der Basis (B) drehbar ist, und
einen B-Arm, der bereitgestellt ist, um eine B-Drehachse parallel zu der A-Drehachse in Bezug auf den A-Arm drehbar zu sein,
wobei der A-Arm und der B-Arm in einen ersten Zustand gebracht werden können, in dem der A-Arm und der B-Arm überlappen, wenn aus einer axialen Richtung der B-Drehachse betrachtet,
die A-Drehachse die erste Drehachse (AX1) nicht schneidet und
ein Spitzenende des Manipulators (M) von einer ersten Position (P1) die an einer Seite gegenüber dem Basisflansch (BF) in Bezug auf die Installationsfläche, die eine obere Oberfläche des Installationsständers (BS) ist, positioniert ist, zu einer zweiten Position (P2) bewegbar ist, die an der Seite gegenüber der Basis (B) in Bezug auf eine Ebene, die parallel zu der Installationsfläche positioniert ist und die A-Drehachse während des ersten Zustands beinhaltet, wenn aus einer Richtung orthogonal zu der ersten Drehachse (AX1) betrachtet.

2. Roboter (20) nach Anspruch 1,
wobei die zweite Position (P2) an einer Seite gegenüber der Basis (B) in Bezug auf die B-Drehachse positioniert ist, wenn aus der Richtung orthogonal zu der ersten Drehachse (AX1) betrachtet.

3. Roboter (20) nach Anspruch 1,
wobei der A-Arm ein zweiter Arm ist.

4. Roboter (20) nach Anspruch 1,
wobei ein Drehbereich des A-Arms 360 Grad oder mehr ist.

5. Roboter (20) nach Anspruch 1,
wobei der Roboter (20) basierend auf Informationen arbeitet, die angeben, ob ein relatives Positionsverhältnis zwischen der A-Drehachse und der B-Drehachse bei einem Betrieb des Roboters (20) zu ändern ist oder nicht.

6. Robotersystem (1), umfassend:
den Roboter (20) nach einem der Ansprüche 1 bis 5;
eine Robotersteuervorrichtung (30), die den Roboter (20) steuert; und
ein Regal, das eine erste Auflagefläche, auf der die erste Position (P1) positioniert ist, und eine zweite Auflagefläche, auf der die zweite Position (P2) positioniert ist, enthält.

## Revendications

1. Robot (20) comprenant :
un support d'installation (BS) ;
une base (B) dotée d'un rebord de base (BF), installée sur le support d'installation (BS) en fixant le rebord de base (BF) sur ledit support d'installation (BS) ; et
un manipulateur (M) disposé sur la base (B) de manière à pouvoir tourner autour d'un premier axe de rotation (AX1),
dans lequel le manipulateur (M) inclut
un bras A rotatif autour d'un axe de rotation A parallèle à une surface d'installation de la base (B), et
un bras B conçu de façon rotative autour d'un axe de rotation B parallèle à l'axe de rotation A par rapport au bras A,
le bras A et le bras B peuvent être mis dans un premier état dans lequel le bras A et le bras B se chevauchent vus depuis une direction axiale de l'axe de rotation B,
l'axe de rotation A ne coupe pas le premier axe de rotation (AX1), et
une extrémité de pointe du manipulateur (M) est déplaçable à partir d'une première position (P1) positionnée sur un côté opposé au rebord de base (BF) par rapport à la surface d'installation, laquelle consiste en une surface supérieure du support d'installation (BS), vers une deuxième position (P2) positionnée sur le côté opposé à la base (B) par rapport à un plan parallèle à la surface d'installation et contenant l'axe de rotation A à travers le premier état, vu depuis une direction orthogonale au premier axe de rotation (AX1).

2. Robot (20) selon la revendication 1,
dans lequel la deuxième position (P2) est positionnée sur un côté opposé à la base (B) par rapport à l'axe de rotation B, vu depuis la direction orthogonale au premier axe de rotation (AX1).

3. Robot (20) selon la revendication 1,
dans lequel le bras A est un deuxième bras.

4. Robot (20) selon la revendication 1,
dans lequel une plage de rotation du bras A est de 360 degrés ou plus.

5. Robot (20) selon la revendication 1,
dans lequel le robot (20) fonctionne sur la base d'informations indiquant s'il est nécessaire ou pas de modifier une relation de position relative entre l'axe de rotation A et l'axe de rotation B pendant le fonctionnement du robot (20).

6. Système de robot (1) comprenant :
le robot (20) selon l'une quelconque des revendications 1 à 5 ;
un dispositif de commande de robot (30) commandant le robot (20) ; et
une étagère incluant une première surface de placement sur laquelle la première position (P1) est positionnée et une deuxième surface de placement sur laquelle la deuxième position (P2) est positionnée.
